# EUROPÄISCHE PATENTANMELDUNG

(11) **EP 1 186 233 A2**
(43) Veröffentlichungstag der Anmeldung: **13.03.2002**
(21) Anmeldenummer: 01121434.3
(22) Anmeldetag: 07.09.2001
(51) Int. Cl.: A01M 7/00

(54) **Spritzgestängeführung**

(30) Priorität: 08.09.2000 DE 10044646
(71) Anmelder: Horsch Maschinen GmbH, 92421 Schwandorf (DE)
(72) Erfinder: Horsch, Michael, 92421 Schwandorf (DE)
(74) Vertreter: Wasmeier, Alfons, Dipl.-Ing.

(57) **Zusammenfassung**

Bei einer Gestängeführung für Maschinen zum Ausbringen von flüssigem oder pulverförmigem Material, wie z. B. Dünger, Spritzmittel und dergl., mit an einem Hubwerk mit dem Fahrzeug befestigtem Gitterrohrrahmen, an dem schwenkbare bzw. klappbare überlange Spritzgestänge befestigt sind, ist das den Gitterrohrahmen mit Spritzgestänge aufnehmende Lager ein Drehlager in Form eines Drehkranzes. Das Spritzgestänge ist über eine Federanordnung in die gewünschte Position einspannbar. Zur einstellbaren Vorspannung des Federsystems ist eine Zylinderanordnung vorgesehen.

## Beschreibung

Die Erfindung betrifft eine Gestängeführung nach dem Oberbegriff des Anspruches 1.

Moderne Spritzgestänge haben heutzutage eine Arbeitsbreite von 40 Metern und darüber. Diese großen Arbeitsbreiten bringen erhebliche Probleme in Bezug auf Führung und Aufhängung mit sich, da der Rahmen des Spritzgestänges nicht nur im Hinblick auf die Anforderungen bei Straßenfahrt mehrmals geknickt und zusammenlegbar bzw. einschwenkbar und einklappbar ausgeführt werden muß, sondern auch Problemen des Hangausgleichs eine ausschlaggebende Bedeutung zukommt.

Bekannte Spritzgestänge weisen im allgemeinen eine Aufhängung an Hebelsystemen auf, die in Drehpunkten mit Bolzen gelagert sind und die Schwierigkeiten in Bezug auf Schwingmomente ergeben.

Aufgabe der Erfindung ist, eine Spritzgestängeführung anzugeben, die die Nachteile bisheriger Gestängeführungen, insbesondere Drehpunkte mit Bolzenlagerung vermeidet, und mit der die bisher bestehenden Nachteile in Bezug auf die Anpassung des Hangausgleichs und die Flexibilität der Aufhängung gelöst werden.

Diese Aufgabe wird gemäß der Erfindung mit den Merkmalen des Anspruches 1 gelöst. Weitere Ausgestaltungen der Erfindung sind Gegenstand der Unteransprüche.

Grundsätzlich wird mit der Erfindung vorgeschlagen, eine Spritzgestängeführung - anstatt mit Drehpunkten mit Bolzen - mit einem Drehlager, insbesondere in Form eines Drehkranzes, auszubilden und das Gestänge in die gewünschte Lage mit Hilfe einer Federanordnung einzuspannen. Das Spannen der Federn erfolgt dabei mit Hilfe von Zylinderanordnungen, insbesondere mit zwei doppelt wirkenden Zylindern, die so ausgebildet und angeordnet sind, daß die Federn beliebig stark vorgespannt werden, daß das Gestänge starr gestellt werden kann, und daß das Gestänge der Bodenkontur (Hangausgleich) anpassbar ist, ohne daß die Vorspannung der Federn verändert werden muß.

Die erfindungsgemäße Gestängeführung wird anhand der Zeichnungen dargestellt. Die Figuren zeigen:
- Fig. 1: eine schematische Seitenansicht eines Schleppers mit Spritzgestänge;
- Fig. 2: eine schematische Aufsicht auf Schlepper und Spritzgestänge;
- Fig. 3: eine perspektivische Ansicht der Spritzgestängeführung nach der Erfindung mit Drehkranz, Mittelrahmen und Gestängeführung (Computerdarstellung);
- Fig. 4: eine Ansicht der Darstellung nach Figur 3 von vorne (zeichnerische Darstellung);
- Fig. 5: eine perspektivische Ansicht der Spritzgestängeführung nach der Erfindung entsprechend Fig. 3 von der entgegengesetzten Seite (Computerdarstellung).

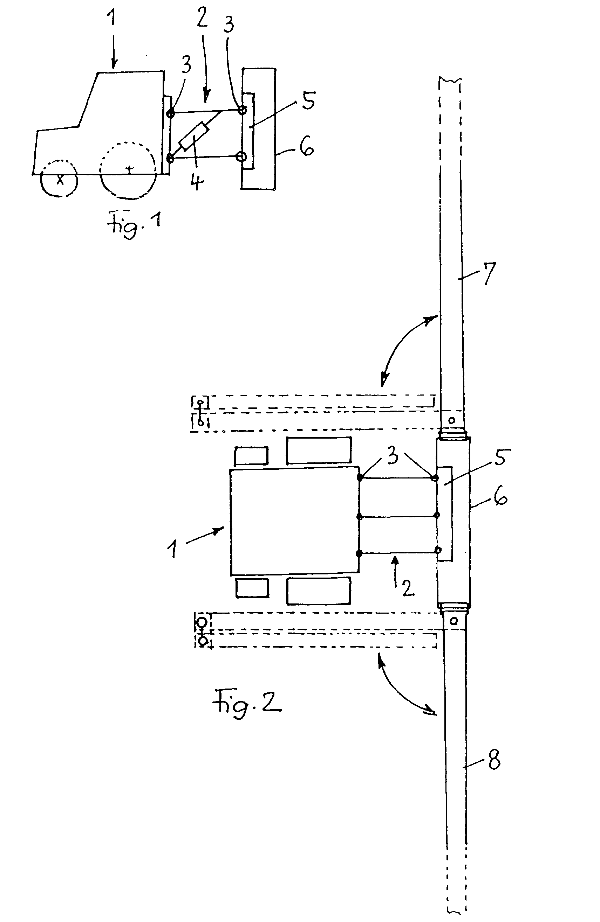

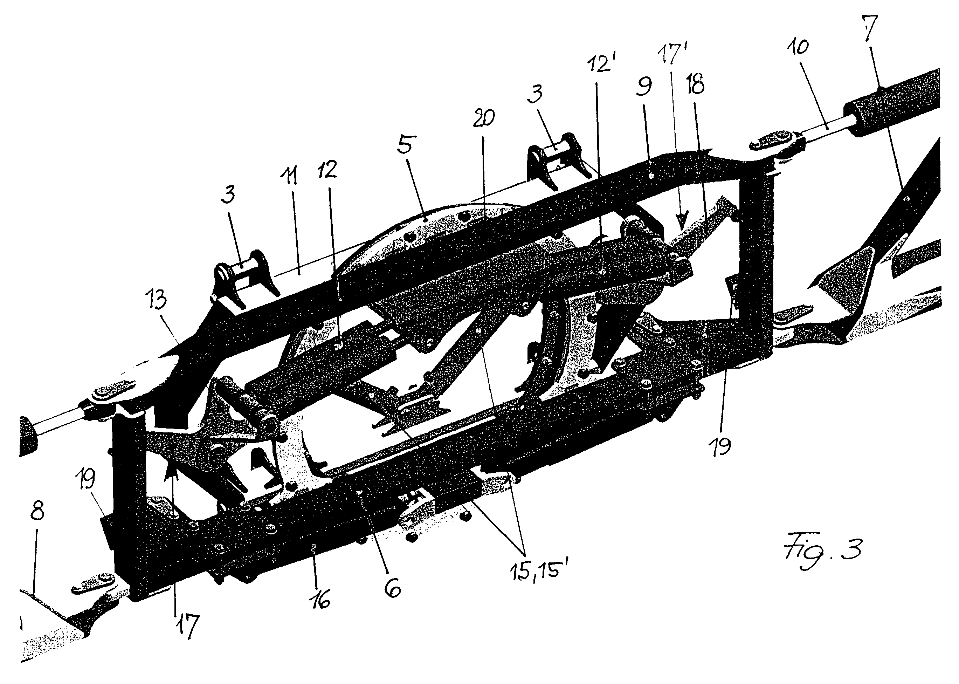

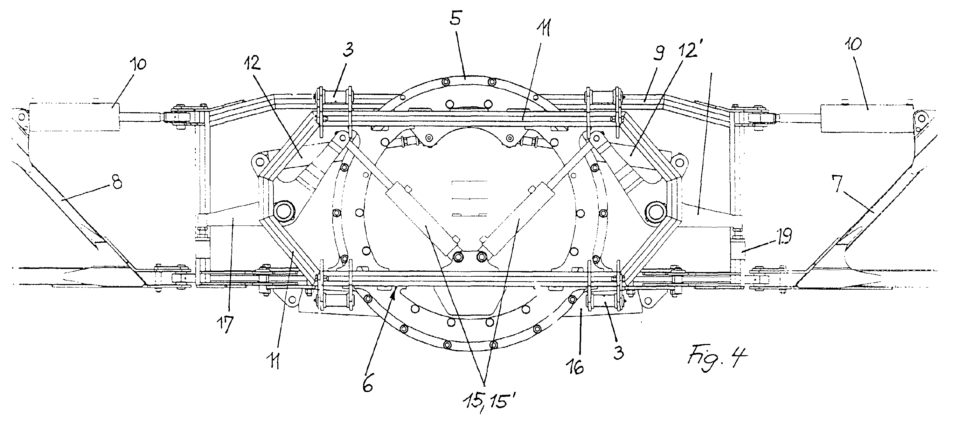

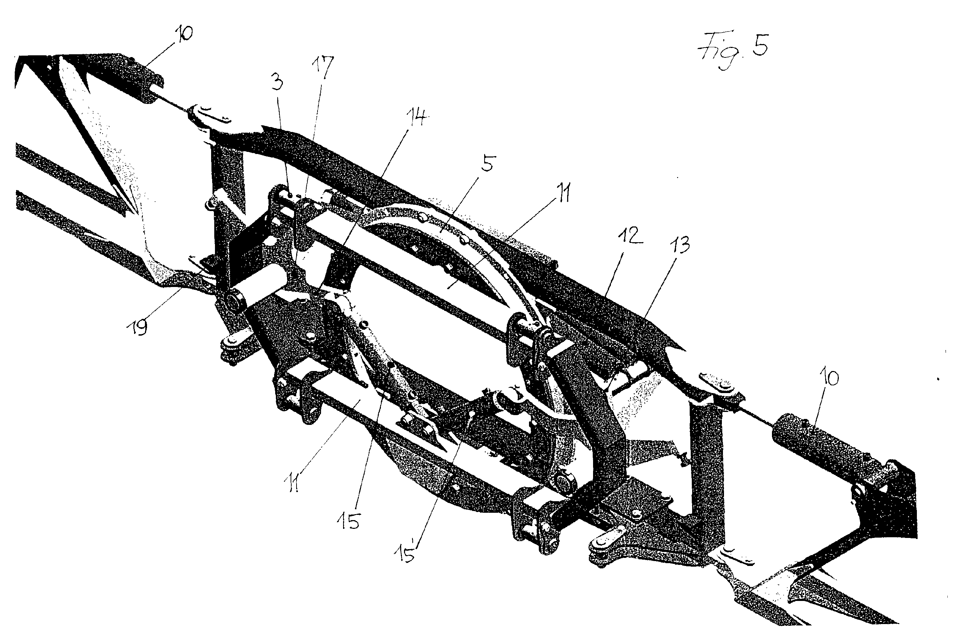

Das Fahrzeug 1 weist ein Hubwerk 2 auf, das über Gummilager 3 und einen Hubzylinder 4 das Spritzgestänge mit seinen Auslegern 7, 8, die mehrfach klappbar ausgeführt sind, aufnimmt. Anstelle von Drehstellen mit Bolzenlagerung herkömmlicher Ausführung ist die Spritzgestängeführung in Form eines zweiteiligen Drehkranzes 5, dessen beide Teile über Kuppellager miteinander verbunden sind, ausgeführt. Der Drehkranz 5 ist zwischen einem Mittelrahmen 6, der den mehrfach einklappbaren Ausleger 7, 8 mit Gestängeteil 9 und im Gestängeteil angeordneten Hubzylindern 10 aufnimmt, und einen parallel dazu angeordneten Hubrahmen 11 angeordnet. Die Spritzgestängeführung ist in Bezug auf den Drehkranz symmetrisch ausgebildet, d. h., daß der linke und der rechte Teil der Spritzgestängeführung, ausgehend von der Drehkranzmitte, einander entsprechend ausgeführt sind.

Mit dem Mittelrahmen 6 sind zwei entgegengesetzt zueinander wirkende Zugfederanordnungen 12, 12' verbunden, deren freie Enden jeweils an einem Arm 13 eines mehrarmigen Lenkers 17, 17' festgelegt sind. Ein weiterer Arm 14 des Lenkers 17 ist mit dem beweglichen bzw. ausfahrbaren Arm eines doppelt wirkenden Zylinders 15, 15' verbunden, dessen stationärer Teil am Hubrahmen 11 befestigt ist. Anstelle zweier doppelt wirkender Zylinder können wahlweise ein oder zwei Hydraulik- oder Pneumatikzylinder oder auch elektrische Aktuatoren vorgesehen werden. Der Hubrahmen 11 nimmt die Gummilager 3, an denen das Gestänge vom Hubwerk 2 des Fahrzeuges 1 getragen wird, sowie die doppelt wirkenden Zylinder 15, 15' auf. Die Zugfedern 12, 12', die mit ihrem einen Ende an dem Arm 13 des Lenkers 17, 17' festgelegt sind, sind mit ihrem entgegengesetzten Ende an einem Rahmenteil 20 befestigt, das seinerseits fest mit dem Mittelrahmen 6 der Spritzgestängeführung verbunden ist. Die doppelt wirkenden Zylinder 15, 15' beaufschlagen beim Ausfahren die Lenker 17, 17', die um ihre Achse verdreht werden, und die die Doppel-Zugfedern 12, 12' spannen, bis sie bei maximaler Drehung auf die Anschläge 19 auftreffen. Die Zylinder 15, 15' sind so ausgelegt und geschaltet, daß sie wahlweise parallel oder überkreuz betätigt werden können.

Die Spritzegestängeführung kann aufgrund der gewählten Konstruktion das Gestänge der Bodenkontur für einen Hang anpassen, ohne daß die Vorspannung der Federn 12, 12' verändert werden muß. Die Spritzgestängeführung ist am Mittelrahmen 6 mit Dämpferelementen 16 versehen.

### Bezugszeichenliste

- 1: Fahrzeug
- 2: Hubwerk
- 3: Gummilager
- 4: Hubzylinder
- 5: Drehkranz
- 6: Mittelrahmen
- 7, 8: Ausleger, mehrfach einklappbar
- 9: Gestängeteil
- 10: Hubzylinder für Ausleger
- 11: Hubrahmen
- 12, 12': Doppel-Zugfedern
- 13, 14: Lenkerarme
- 15, 15': doppelt wirkende Zylinder
- 16: Dämpferelemente
- 17, 17': Lenker
- 19: Anschlag
- 20: Rahmenteil

## Patentansprüche

1. Gestängeführung für Maschinen zum Ausbringen von flüssigem oder festem, staubförmigem Material, mit an einem Hubwerk mit dem Fahrzeug befestigtem Gitterrohrrahmen, der aus einem Mittelrahmen und seitlich von diesem ausgehenden angelenkten Auslegerrahmen besteht, und an dem schwenkbare bzw. klappbare überlange Spritzgestänge befestigt sind, **dadurch gekennzeichnet, daß** das den Gitterrohrrahmen mit Spritzgestänge (7, 8) aufnehmende Lager (5) ein Drehlager in Form eines Drehkranzes ist.

2. Gestängeführung nach Anspruch 1, **dadurch gekennzeichnet, daß** das Hubwerk über Gummilagerelemente (3) mit dem Fahrzeug (1) und über weitere Gummilagerelemente (3) mit dem Gitterrahmen befestigt ist.

3. Gestängeführung nach Anspruch 1 oder 2, **dadurch gekennzeichnet, daß** das Spritzgestänge über eine Federanordnung (12)in die gewünschte Position einspannbar ist.

4. Gestängeführung nach einem der Ansprüche 1 - 3, **dadurch gekennzeichnet, daß** die Federanordnung (12) aus mechanischen, hydraulischen und/oder pneumatischen Federn besteht.

5. Gestängeführung nach Anspruch 4, **dadurch gekennzeichnet, daß** die Federn (12) wahlweise als Zugfedern oder als Druckfedern ausgelegt sind.

6. Gestängeführung nach einem der Ansprüche 1 - 5, **dadurch gekennzeichnet, daß** eine Zylinderanordnung (15, 15') zur einstellbaren Vorspannung der Federanordnung (12) vorgesehen ist.

7. Gestängeführung nach Anspruch 6, **dadurch gekennzeichnet, daß** das Gestänge über die Zylinderanordnung (15, 15') ohne Veränderung der Vorspannung der Federn (12, 12') an die Bodenkontur anpassbar ist.

8. Gestängeführung nach Anspruch 6, **dadurch gekennzeichnet, daß** das Gestänge über die Zylinderanordnung (15, 15') starr gestellt wird.

9. Gestängeführung nach Anspruch 6, **dadurch gekennzeichnet, daß** die Zylinderanordnung (15, 15') doppelt wirkende Zylinder aufweist, die wahlweise parallel oder über Kreuz geschaltet sind.

10. Gestängeführung nach einem der Ansprüche 1 - 9, **dadurch gekennzeichnet, daß** die Gummilagerelemente (3) im Hubwerk (2), in denen das Gestänge gelagert ist, so ausgelegt sind, daß sie das Vor- und Zurückschwingen des Gestänges auffangen, und daß die Gummilagerung (3) gleichzeitig als Drehpunkt für einen Parallelaushub des Gestänges wirkt.
